# EUROPEAN PATENT SPECIFICATION

(11) **EP 2 800 345 B1**
(45) Date of publication and mention of the grant of the patent: **05.08.2015**
(21) Application number: 13165852.8
(22) Date of filing: 29.04.2013
(51) Int. Cl.: H04N 21/41, H04N 21/4788, H04M 1/725, G06F 3/023, H04N 7/173, H04N 21/475

(54) **Method, electronic device and system for remote text input**
Verfahren, elektronische Vorrichtung und System zur Ferntexteingabe
Procédé, dispositif électronique et système de saisie de texte à distance

(43) Date of publication of application: 05.11.2014
(73) Proprietor: Swisscom AG, 3050 Bern (CH)
(72) Inventor: Papstein, Guy, 8046 Zürich (CH)
(74) Representative: P&TS SA (AG, Ltd.)

(56) References cited:
- WO-A1-03/024107
- GB-A- 2 488 109
- US-A1- 2008 246 733

## Description

### Field of the invention

The present invention concerns a method for remote text input in an electronic device and a corresponding electronic device and system.

### Description of related art

While personal computers have specialized keyboards for text input, most electronic devices do not provide adequate user controls to input text. Most of the electronic devices have only a remote control which is normally very simple and comprises only the main function of the electronic device, but not a keyboard for inputting text. The following solutions are available in the state of the art.

Most electronic devices with simple remote controls provide a display based keyboard. The keys of the keyboard is chosen by four direction keys navigating on the display based keyboard and a fifth key for confirming each selected key. This may keep the remote control simple without any additional keys for the remote control, but text input is very time consuming and very often stops users from using functions of the TV requiring text input.

QWERTY-keyboards as used with personal computers can be connected wireless to the electronic device and provide an effective tool for text input. However, for most functions of the electronic device a QWERTY-keyboard is much too complex and too big so that the advantageous for the text input are compensated by the disadvantages of this kind of remote control. In some cases the QWERTY-keyboards are reduced in size, which always raises the problem of the trade off between size of a key and size of the remote control. In addition, the text input by the QWERTY keyboard can only be checked on a display of the electronic device so that the user has to change his view always between the display which may be far away and the keyboard. This is already a burden for people with good eyes, but becomes a serious barrier for person with different defects of vision for the distance and the vicinity.

An alternative method to input text is over a number field. The number 1 is used to input A, B or C, the number 2 is used to enter D, E or F, etc.. This input method well-known from mobile phones, but is used less and less with the rise of smartphones which use also full keyboard. In addition, this method also requires to control the input over the display of the device.

Therefore, recently smartphones are directly used as remote controls for the electronic device. This has the advantage that the user can use the text input well known by the daily use of his smartphone and see his text input directly on the smartphone while typing. However, for each electronic device the user has to download an application for the remote control of the electronic device. On the other side, the manufacturer has to offer for each type of smartphone or each type of operating system of a smartphone an application and update the applications with each version of the smartphone operating system. Therefore the installation and maintenance of those applications are cumbersome for the manufacturer and the user.

Especially for video signal devices like televisions, set top boxes, video recorder, etc., none of the presented solutions of the state of the art are suitable for text input. The user desires his simple well known remote control for the classic functions of the TV. On the other side, the remote control often does not allow easy entry of complex texts.

### Brief summary of the invention

The object of the invention is therefore to provide a method, system and electronic device for remote text input on the electronic device which provides simple and easy remote control for the main functions of the electronic device, still provides an effective text input for a user without the necessity of performing complex installations of apps.

The object is solved by a method for remote text input in an electronic device according to the independent claims. This method comprises the step of outputting a display signal displaying a text field for inputting text. A request for text input is sent from the electronic device to a communication device addressed by an identifier of an identity module of the communication device. At the electronic device, the requested text input is received from the communication device.

The object is solved also by a method for remote text input in an electronic device via a communication device which comprises the following steps. A request for text input is received from the electronic device at the communication device, wherein the request addresses the communication device on the basis of an identifier stored in an identity module of the communication device. A text input is received from the user interface of the communication device. The text input is sent from the communication device to the electronic device.

The object is further solved by an electronic device according to the independent claims comprising: A display section configured to output a display signal displaying a text field for inputting text; a user control configured to receive user input; a communication section configured to send information to a communication device addressed by an identifier of an identity module of the communication device and to receive information from the communication device; a processor configured to control the display section to output a display signal displaying a text field for inputting text, to control the communication section to send a request for text input to the Communication device in response to receiving from the user control a selection to input the text in the text field over a communication device and to receive the requested text input from the communication device.

The object is further solved by a system comprising an electronic device as explained before and a communication device.

The present solution allows to using a standardized communication path on the basis of the identification information stored in identity modules used e.g. in mobile cellular telephone networks. This allows to connecting the smartphone with an electronic device without any complex download and installation steps. The user has simply to enter once his phone's identifier like his phone number in the electronic device and the user can use his communication device for text input in the electronic device. This has the huge advantage that the user can use familiar functions of text input offered by his well-known communication device. This is especially advantageous for electronic devices such as video signal devices like televisions, set top boxes, video recorder, etc., but is not restricted to those.

The dependent claims refer to advantageous embodiments of the invention.

In one embodiment, in response to outputting said display signal, from a user control of the electronic device a selection to input the text over a communication device is received.

In one embodiment, the user control of the electronic device is a remote control. The present invention is especially advantageous for electronic devices with remote controls, because most remote controls have only rudimentary keys which are not suitable enough for a comfortable text input. Therefore, it is convenient to choose with the simple remote control the function of the text input via a communication device and use the comfortable functions for text input of the communication device.

In one embodiment, the user control is different from the communication device. The present invention is especially advantageous for user controls of electronic devices which are different from the communication devices.

In one embodiment, the identifier is one of a telephone number corresponding to a SIM as identity module and an IMSI corresponding to the SIM. It is very convenient to use the telephone number of the communication device as identifier, because the user normally knows his phone number and can configure the text input via the communication device only be entering his phone number.

In one embodiment, the selection to input the text over a communication device comprises the input of the identifier of the identity module. This input can be performed by selecting out of a list an identifier or by entering the identifier by the user control of the electronic device.

In one embodiment, the request is sent over a mobile phone network and the identifier is an identifier of the mobile cellular telephone network. This embodiment is especially advantageous, because the communication over mobile cellular telephone networks is highly standardized such that each communication device suitable for communication with the mobile cellular telephone network is configured to receive a request over the mobile cellular phone network without any configuration of the communication device.

In one embodiment, the request is sent in a SMS message.

In one embodiment, the SMS sent comprises a telephone number of origin as origin of the SMS and the electronic device receives the requested text input from an SMS sent to said telephone number of origin. This embodiment has the advantage that the user of the Communication device can use an SMS as backchannel by simply answering the request of the electronic device.

In one embodiment, the request comprises a link to the internet, the link comprises a text input field, and the electronic device receives the requested text input from the link. This embodiment has the advantage that that a large number of text input fields can be sent in one request by creating a webpage with all requested text fields and by sending only the link to this webpage to the communication device. Since the access of webpages is highly standardized and possible by nearly all Communication devices, this allows a very simple back channel.

In one embodiment, the link is created unique for at least one of each request and each electronic device.

In one embodiment, the request comprises the address of the electronic device in a local connection, and the requested text input is received at the electronic device via the local connection.

In one embodiment, the method comprises the further steps of outputting a display signal displaying the requested text input received at the electronic device and confirming the text input by the user control of the electronic device. This has the advantage that the electronic device is mainly controlled via the user control of the electronic device, and the text input is realized via the communication device which is more adapted for text input.

In one embodiment, the method comprises the further steps of receiving the request at the communication device, receiving text input by the user interface of the communication device and sending the text input from the communication device to the electronic device.

### Brief Description of the Drawings

The invention will be better understood with the aid of the description of an embodiment given by way of example and illustrated by the figures, in which:
Fig. 1 shows an exemplary embodiment of the system for remote text input;
Fig. 2 shows an exemplary process for remote text input; and
Fig. 3A, 3B, 3C, 3D and 3E show an exemplary embodiment of the method for remote text input.

### Detailed Description of possible embodiments of the Invention

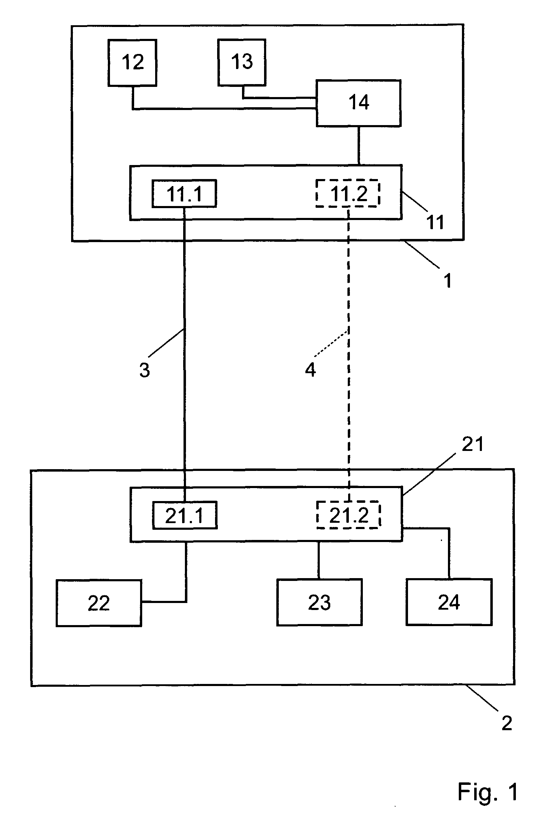

Fig. 1 shows an embodiment of the system for remote text input. The system comprises an electronic device 1, a communication device 2, a first communication connection 3 and eventually a second communication connection 4. The electronic device 1 is connected over a first communication connection 3 and in some cases also over a second communication connection 4 to the communication device 2.

The electronic device 1 is configured to receive text input over the first communication connection 3 and comprises a communication section 11, a user control 12, a display section 13 and a processor 14.

In accordance with various embodiments of the invention, the first communication connection 3 may be any communication link suitable for data transfer. The first communication connection 3 may comprise any Internet Protocol (IP) or also circuit-switched communication protocols, over fixed or mobile communication links including, optical fibre, copper links, satellite links etc. A Person skilled in the Art will readily recognize that the system and method disclosed here may be operable over any type of data link. The first communication connection 3 may comprises a mobile cellular network such as a mobile cellular telephone network, Global System for Mobil Communications (GSM), Universal Mobile Telecommunications System (UMTS), Long Term Evolution (LTE) or other mobile phone standards defined by the European Telecommunications Standards Institute (ETSI). The first communication connection 3 may also comprise a connection over an internet protocol (IP) and over a mobile cellular network. For example, the first communication connection 3 may provide an internet connection between the electronic device 2 and a server and provide a mobile cellular network between the server and the communication device 2.

The second communication connection 4 is a local communication connection between the electronic device 1 and the communication device 2. Examples for a local communication connection 4 are Bluetooth (registered trademark), Wireless Local Area Network (WLAN) or an Infrared link. The second communication connection 4 is not necessary for the present invention, but might be useful for some embodiments.

The communication device 2 is configured to receive a request from the electronic device 1, to input text and to transfer the text input back to the electronic device 1. The communication device 2 comprises a communication section 21, a text input section 22, a display 23 and an identity module 24. Examples of communication devices 2 are mobile phones, smartphones, tablets, portable computers or other.

The communication section 21 is configured to communicate with the electronic device 1. The communication section 21 comprises the first communication section 21.1 and the second communication section 21.2. The first communication section 21.1 is configured to communicate over the first communication connection 3 with the electronic device 1. In an embodiment, where the communication device 2 is connected via an internet connection, the first communication section 21.1 is configured to communicate using e.g. IP over the first communication connection 3. In an embodiment, where the communication device 2 is connected via a mobile cellular network, the first communication section 21.1 is configured to communicate with the mobile cellular network on the basis of the corresponding protocols and standards. For example, the first communication section 21.1 could be a GSM transceiver.

The identity module 24 contains an identifier which identifies the user of the communication device 2. The identifier may be suitable to identify the user of the communication device 2 within a mobile cellular network or a mobile cellular telephone network. The identity module may be a subscriber identity module (SIM). The SIM, in some instances, is a memory storing at least one identifier of a mobile cellular network. In most cases the international mobile subscriber number (IMSI) is used as identifier or the telephone number corresponding to this IMSI. In one embodiment, the identity module 24 is a physical card which is inserted in a slot of the communication device 2. In another embodiment, the identity module 24 is a so called virtual SIM or embedded SIM which stores information of a SIM card directly in the communication device 2 or in another SIM card relating to another identifier. The identity module 24 is connected with the first communication section 21.1. The information of the identity module 24 is used to identify the communication device 2 in the first communication connection 3, e.g. the mobile cellular network or the internet. The second communication section 21.2 is configured to communicate with the electronic device 1 over the second communication connection 4. The second communication section 21.2 is only necessary, if a local communication connection 4 is desirable.

The text input section 22 is configured to receive text information from a user. The text input section 22 could be a keyboard, a virtual keyboard displayed on a touchscreen, a number block which allows to enter text by relating a certain amount of signs to single keys of the number block, a voice recognition, etc.. The invention is not restricted to a certain kind of text input of the communication device 2. The advantage of the invention is that the text input at communication device 2 depends only on the potential text input possibilities of the communication device 2 to which the user of the communication device 2 is used to.

The display 23 is configured to display the text input. The display 23 is not necessary for the invention. However, if the communication device 2 comprises a display 23, the text input in the communication device 2 can be controlled on the display 23 of the communication device 2 and the electronic device 1 does not need a display or it is not necessary to show the text input on the screen of the electronic device 1. In some cases, the user wants to enter secret information like a login information which he does not want to display at a display of the electronic device 1 which may be visible.

The communication section 11 of the electronic device 1 is configured to communicate with the communication device 2 and comprises the first communication section 11.1 and the second communication section 11.2. The first communication section 11.1 is configured to communicate over the first communication connection 3 with the communication device 2. In the embodiments, where the electronic device 1 is connected via an internet connection, the first communication section 11.1 is configured to communicate using IP. In the embodiment, where the electronic device 1 is connected via a mobile cellular network, the first communication section 11.1 is configured to communicate with the mobile cellular network on the basis of the corresponding protocols and standards. For example, the first communication section 11.1 could be a GSM transceiver. The second communication section 11.2 is configured to communicate with the communication device 2 over the second communication connection 4. The second communication section 11.2 is only necessary, if a local communication connection is desirable.

The user control 12 is configured to control the functions of the electronic device 1 and to receive user input for this control. In one embodiment, the user control 12 is a remote control which is connected to the electronic device by a wireless connection, e.g. Infrared, Bluetooth (registered trademark) or WLAN. In another embodiment, the user control 12 is integrally included in the electronic device 1. In a further embodiment, the user control 12 comprises a first part which is integrally connected in the electronic device 1 and a second part which corresponds to a remote control.

The display section 13 is configured to output a display signal. The display section 13 could also comprise a display which displays the display signal. However, a display is not necessary for the present invention. For example, a set top box as an electronic device 1 may also not have a display which shows the display signal output, but still has a display section 13 which outputs a display signal to an external display.

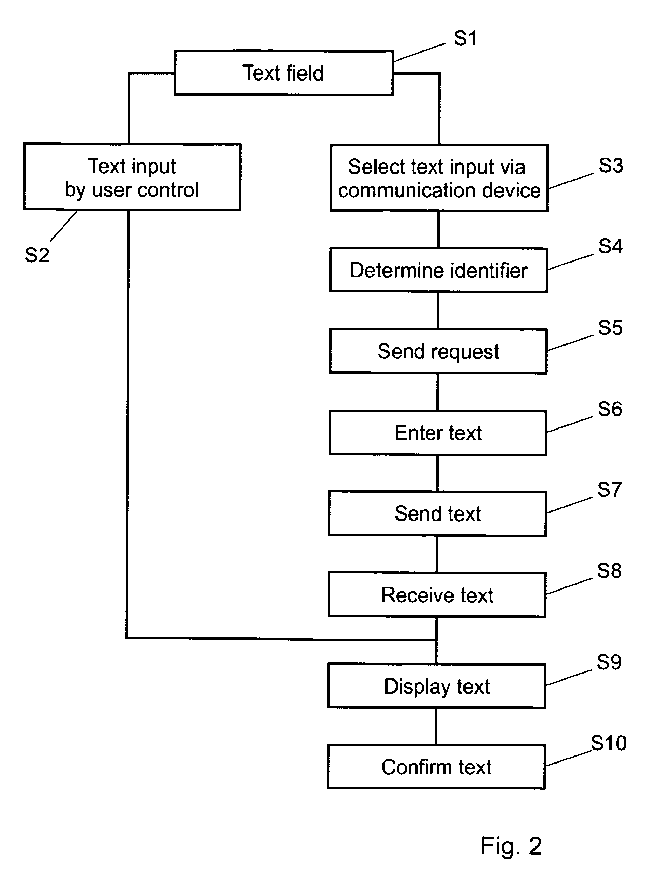

The processor 14 is configured to control at least the functional blocks of the electronic device 1 illustrated. The functions of the processor 14 are explained in more detail in relation with the method shown in Fig. 2.

Fig. 2 shows the method steps of inputting text via the communication device 2. The processor 14 is configured to output in a first step S1 via the display section 13 a display signal with at least one text field for inputting text. Said display signal might be displayed on a display of the electronic device 1 or on a display of another device connected to the electronic device 1. In response to outputting said display signal, the processor 14 waits for receiving by the user control 12 the text input directly (S2) or the user input for selecting text input via a communication device 2 (S3). The selection in S2 might be realized by displaying in the display signal a button for text input via a communication device 2 which can be selected by the user control 12, e.g. using arrow keys and a confirmation key of the user control 12. Alternatively, the text input via the communication device 2 can also be initiated by pressing a special key or combination of keys on the user control 12. Any other way to input this selection is suitable for this invention, e.g. the selection can be realized by voice input. In another embodiment, the text input via the communication device 2 is automatically preselected so that steps S2 and S3 would be superfluous. If the processor 14 receives the user input for selecting the text input via a communication device 2 in step S3 or if this text input is automatically preselected, the processor 14 determines an identifier suitable for identifying and communicating with the communication device 2. This identifier corresponds to the identifier stored in the identity module 24 of the communication device 2. The identifier may be suitable to identify a user of the communication device 2. The identifier may be suitable to identify the user of the communication device 2 in the first communication connection 3. The identifier is for example the telephone number of the communication device 2. This telephone number may correspond to the IMSI stored in the SIM of the communication device 2. The identifier is determined in the electronic device 1 on the basis of user input, a preselected identifier or rules for selecting at least one identifier from a set of preselected identifiers. It is also possible to determine more than one identifiers, so that the text input could be provided by more than one communication device 2. The processor 14 initiates in step S5 the communication section 11 to create a request and send the created request to the communication device 2 on the basis of the determined identifier of the communication device 2 to input text. Preferably, the communication section 11 initiates to send an SMS with said request to the communication device 2. For example, the communication section 11 which is not directly connected to the mobile cellular network could connect over the internet to a server which sends the request via SMS to the communication device 2. Instead of sending a SMS, an instant message which addresses an instant message ID corresponding to the identifier of the identity module 24 could be sent.

The user receives now the request for text input on the communication device 2. If an SMS is used for sending the request, it is guaranteed that a large number of communication devices 2 can read the request from the electronic device 1, because the receiving of SMS is standardized. Therefore, no special application is necessary to be downloaded and installed. In one embodiment, the request contains a link to the internet comprising a text input field. Therefore, the user can open a text input field on the communication device 2 by selecting the link in the received SMS. In another embodiment, the request is send in an executable message and could contain some information to establish a local connection 4 to the electronic device 1 and to configure the communication device 2 to directly control the electronic device 1 for text input.

In step S6, the user uses the communication device 2 in order to input text. This text input is entered in the request, e.g. the text field of the weblink or the text field of the electronic device 1 controlled by the communication device 2. This has the advantage that the user can use any way of entering text of his communication device 2 which he is comfortable with. On the other side the user control 12 of the electronic device 1 which is different from the communication device 2 can be kept very simple.

Once the text input is finished, the user confirms the text input, and the text input is sent back to the electronic device 1 in step S7. In the embodiment of the weblink, a confirmation or send button of the corresponding website could be used to send the text input of the text field of the link to the electronic device 1. In the embodiment of the local control of the electronic device 1, the text may be already sent to the electronic device over the local connection 4, and the communication device 2 sends only the confirmation to the electronic device 1 in step S7.

The processor 14 receives in step S8 over the communication section 12 the text input from the communication device 2. The processor 14 may initiate in step S9 the display section 13 to output the display signal with the text field including now also the received text input. Once the processor 14 receives in step S10 from the user control 12 a confirmation of the text input, the text input is processed. The steps S9 and/or S10 might be superfluous, if the text input is processed directly when receiving the text input from the communication device 2.

If the user would directly input text over the user control 12 in step S2, the method would jump directly to displaying the text input in step S9.

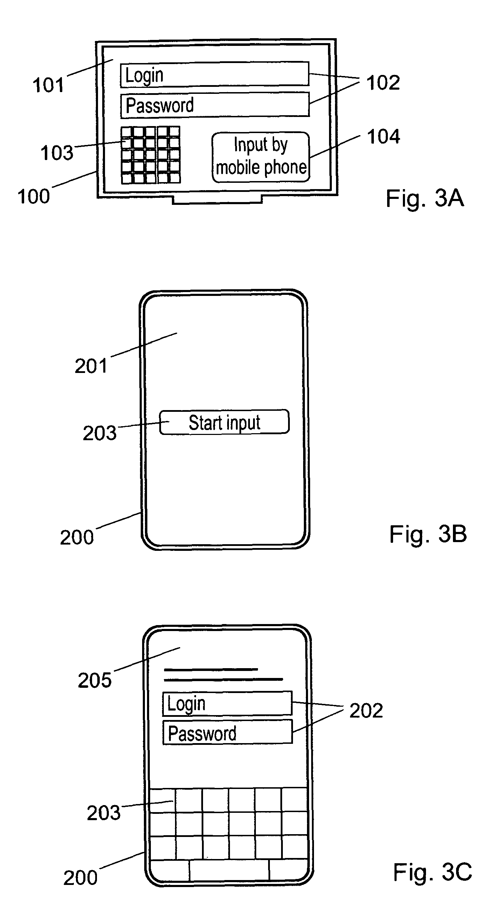

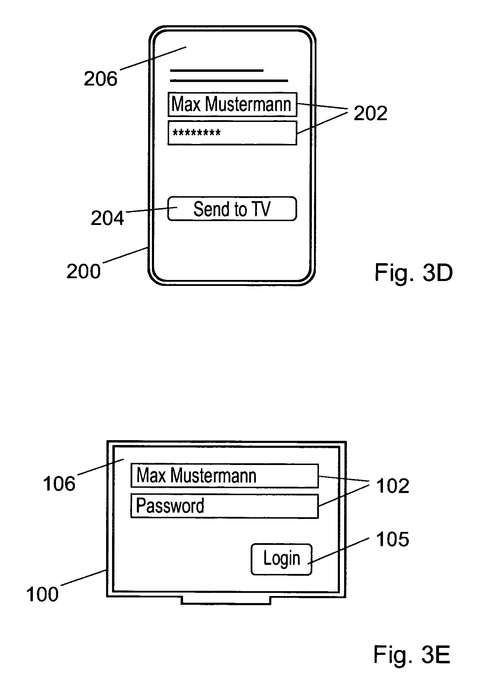

Fig. 3A to 3E show the exemplary displayed user interfaces of a television 100 as exemplary electronic device 1 and a smartphone 200 as exemplary communication device 2 during different method steps. Fig. 3A shows the display signal 101 on a display of the television 100. The display signal 101 shows two text input fields 102, one for a user/account/login name and another for a password. The input of authentication information by this method has the additional advantage that third persons might not see the authentication information while inputting those in the electronic device 1. This allows also that another user which normally does not use the electronic device 1 can safely enter his authentication information by his communication device 2. In addition, authentication information often requires special characters which require even more evolved text input measures. However, the invention is not restricted to input authentication information, but can be used for all kinds of text input. The display signal 101 contains here a display keyboard 103 and a button 104 for selecting text input via the communication device 2. Fig. 3B shows the display signal 201 showing the request received at the smartphone 200. The request contains a link 202 to a page in the internet comprising the text field or the text fields for the requested text input. Once the user selects the link 202, a browser is opened showing the link 202. Fig. 3C shows the display signal 205 with the link opened in the browser showing the text input fields 202 corresponding to the text input fields 102 on the electronic device 1. The user can use all methods offered by his smartphone 200 to enter the text. Fig. 3C shows a display keyboard 203 opened on the touch screen of the smartphone 200 used for the text input, for example. Fig. 3D shows the display signal 206 of the smartphone 200 with the link opened in a browser showing the text input fields 202 and the text input therein. The link comprises a button 204 for confirming the text input and sending the text input to the electronic device 1. Fig. 3E shows the display signal 106 of the television 100 comprising the text fields 102 with the text input received from the smartphone 200 and a button 105 for confirming the text input.

## Claims

1. Method for remote text input in an electronic device (1), comprising the steps of:
outputting at the electronic device (1) a display signal displaying a text field for inputting text (S1);
sending a request for text input from the electronic device (1) to a communication device (2) addressed by an identifier of an identity module (24) of the communication device (2); and
receiving at the electronic device (1) the requested text input from the communication device (2).

2. Method according to the previous claim comprising the further step of in response to outputting said display signal, receiving from a user control of the electronic device a selection to input the text over a communication device (2).

3. Method according to the previous claim, wherein the user control (12) of the electronic device (1) is a remote control.

4. Method according to claims 2 or 3, wherein the user control (12) is different from the communication device (2).

5. Method according to one of the previous claims, wherein the identity module (24) is a subscriber identity module and the identifier is a telephone number corresponding to the subscriber identity module.

6. Method according to one of the previous claims 1 to 4, wherein the request is sent over a mobile cellular network and the identifier is an identifier of the mobile cellular network.

7. Method according to the previous claim, wherein the request is sent in a SMS message.

8. Method according to the previous claim, wherein the SMS sent comprises a telephone number of origin as origin of the SMS and the electronic device (1) receives the requested text input from an SMS sent to said telephone number of origin.

9. Method according to one of the previous claims, wherein the request comprises a link to the internet, the link comprises a text input field, and the electronic device (1) receives the requested text input from the site corresponding to said link.

10. Method according to one of the claims 1 to 7, wherein the request comprises the address of the electronic device (1) in a local connection (4), and the requested text input is received at the electronic device (1) via the local connection (4).

11. Method according to one of the previous claims comprising the further steps of outputting a display signal displaying the requested text input received at the electronic device (1) (S9) and confirming the text input by the user control of the electronic device (1) (S10).

12. Method for remote text input in an electronic device (1) via a communication device (2), comprising the steps of:
receiving a request for text input from the electronic device (1) at the communication device (2), wherein the request addresses the communication device (2) on the basis of an identifier stored in an identity module (24) of the communication device (2);
receiving text input from a user of the communication device (2) and
sending the text input from the communication device (2) to the electronic device (1).

13. Computer program configured to execute the method according to one of claims 1 to 12 on a processor.

14. Electronic device (1) comprising:
a display section (13) configured to output a display signal displaying a text field for inputting text;
a communication section (11) configured to send information to a communication device (2) addressed by an identifier of an identity module (24) of the communication device (2) and to receive information from the communication device (2);
a processor (14) configured to:
control the display section (13) to output a display signal displaying a text field for inputting text;
control the communication section (11) to send a request for text input to the communication device (2) and
to receive the requested text input from the communication device (2).

15. System comprising the electronic device (1) according to claim 14 and a communication device (2) for inputting text in the electronic device (1).

## Patentansprüche

1. Verfahren zur Ferntexteingabe in einem elektronischen Gerät (1), aufweisend die Schritte:
Ausgeben eines Bildschirmsignals, das ein Textfeld für eine Texteingabe darstellt (S1), an dem elektronischen Gerät (1);
Senden einer Anfrage zur Texteingabe von dem elektronischen Gerät (1) an ein Kommunikationsgerät (2), das durch einen Identifizierer eines Identitätsmodul (24) des Kommunikationsgeräts (2) addressiert wird; und
Empfangen an dem elektronischen Gerät (1) die angefragten Texteingabe von dem Kommunikationsgerät (2).

2. Verfahren nach dem vorigen Anspruch aufweisend, in Antwort auf das Ausgeben des Bildschirmsignals, den weiteren Schritt des Empfangens einer Auswahl, den Text über ein Kommunikationsgerät (2) einzugeben, von einer Benutzersteuerung des elektronischen Geräts.

3. Verfahren nach dem vorigen Anspruch, wobei die Benutzersteuerung (12) des elektronischen Geräts (1) eine Fernbedienung ist.

4. Verfahren nach Anspruch 2 oder 3, wobei die Benutzersteuerung sich von dem Kommunikationsgerät (2) unterscheidet.

5. Verfahren nach einem der vorigen Ansprüche, wobei das Identitätsmodul (24) ein Abonnentenidentitätsmodul (SIM) ist und der Identifizierer eine dem Abonnentenitentitätsmodul entsprechende Telefonnummer ist.

6. Verfahren nach einem der vorigen Ansprüche 1 bis 4, wobei die Anfrage über ein Mobilfunknetzwerk gesendet wird und der Identifizierer ein Identifizierer des Mobilfunknetzwerks ist.

7. Verfahren nach dem vorigen Anspruch, wobei die Anfrage in einer SMS Nachricht gesendet wird.

8. Verfahren nach dem vorigen Anspruch, wobei die gesendete SMS eine Herkunftstelefonnummer als Herkunft der SMS aufweist und das elektronische Gerät (1) die angefragten Texteingabe von einer an die Herkunftstelefonnummer gesandten SMS empfängt.

9. Verfahren nach einem der vorigen Ansprüche, wobei die Anfrage einen Link auf das Internet aufweist, wobei der Link ein Texteingabefeld aufweist, und das elektronische Gerät (1) die angefragte Texteingabe von der zu dem Link korrespondierenden Seite empfängt.

10. Verfahren nach einem der Ansprüche 1 bis 7, wobei die Anfrage die Addresse des elektronischen Geräts (1) in einem lokalen Verbindung (4) aufweist, und die angefragte Texteingabe über die lokale Verbindung (4) an dem elektronischen Gerät (1) empfangen wird.

11. Verfahren nach einem der vorigen Ansprüche aufweisend die weiteren Schritte des Ausgebens eines Bildschirmsignals, das die an dem elektronischen Gerät (1) empfangene angefragte Texteingabe darstellt, (S9) und bestätigen der Texteingabe durch die Benutzersteuerung des elektronischen Geräts (1) (S10).

12. Verfahren zur Ferntexteingabe in ein elektronisches Gerät (1) über ein Kommunikationsgerät (2), aufweisend die Schritte:
Empfangen einer Anfrage zur Texteingabe von dem elektronischen Gerät (1) an dem Kommunikationsgerät (2), wobei die Anfrage das Kommunikationsgerät (2) auf der Basis eines in einem Identitätsmoduls (24) des Kommunikationsgeräts (2) gespeicherten Identifizierers addressiert; und
Empfangen einer Texteingabe von einem Benutzer des Kommunikationsgeräts (2);
Senden der Texteingabe von dem Kommunikationsgerät (2) an das elektronische Gerät (1).

13. Computerprogramm ausgebildet, das Verfahren nach einem der Ansprüche 1 bis 12 auf einem Prozessor auszuführen.

14. Elektronisches Gerät (1) aufweisend:
eine Darstellungseinheit 13) zum Ausgeben eines Bildschirmsignals, das ein Textfeld für eine Texteingabe darstellt;
eine Kommunikationseinheit (11) ausgebildet zum Senden von Informationen an ein Kommunikationsgerät (2), das durch einen Identifizierer eines Identitätsmoduls (24) des Kommunikationsgeräts (2) addressiert wird, und zum Empfangen von Informationen von dem Kommunikationsgerät (2) ausgebildet ist;
einen Prozessor (14) ausgebildet:
die Darstellungseinheit zu kontrollieren ein Bildschirmsignal, das ein Textfeld für eine Texteingabe darstellt, auszugeben;
die Kommunikationseinheit zu kontrollieren eine Anfrage zur Texteingabe an das Kommunikationsgerät (2) zu schicken und die angeforderte Texteingabe von dem Kommunikationsgerät (2) zu empfangen.

15. System aufweisend ein elektronisches Gerät (1) nach Anspruch 14 und ein Kommunikationsgerät (2) zur Eingabe von Text in das elektronische Gerät (1).

## Revendications

1. Procédé pour la saisie de texte à distance dans un dispositif électronique (1), comprenant les étapes suivantes:
émission au niveau du dispositif électronique (1) d'un signal d'affichage affichant un champ de texte pour la saisie de texte (51);
envoi d'une requête de saisie de texte par le dispositif électronique (1) à un dispositif de communication (2) adressé par un identificateur d'un module d'identification (24) du dispositif de communication (2); et
réception au niveau du dispositif électronique (1) du texte requis saisi par le dispositif de communication (2).

2. Procédé selon la revendication précédente, comprenant l'étape supplémentaire de recevoir depuis un moyen de contrôle d'un utilisateur du dispositif électronique, en réponse à l'émission dudit signal d'affichage, une sélection pour saisir le texte au travers d'un dispositif de communication (2).

3. Procédé selon la revendication précédente, dans lequel le moyen de contrôle de l'utilisateur (12) du dispositif électronique (1) est une télécommande.

4. Procédé selon les revendications 2 ou 3, dans lequel le moyen de contrôle de l'utilisateur (12) est différent du dispositif de communication (2).

5. Procédé selon l'une des revendications précédentes, dans lequel le module d'identification (24) est un module d'identité d'abonné (SIM, Subscriber Identity Module) et l'identificateur est un numéro de téléphone correspondant au module d'identité d'abonné.

6. Procédé selon l'une des revendications précédentes 1 à 4, dans lequel la requête est envoyée au travers d'un réseau cellulaire mobile et l'identificateur est un identificateur du réseau cellulaire mobile.

7. Procédé selon la revendication précédente, dans lequel la requête est envoyée dans un message SMS.

8. Procédé selon la revendication précédente, dans lequel le SMS envoyé comprend un numéro de téléphone d'origine en tant qu'origine du SMS et le dispositif électronique (1) reçoit, depuis un SMS envoyé audit numéro de téléphone d'origine, le texte saisi tel que requis.

9. Procédé selon l'une des revendications précédentes, dans lequel la requête comprend un lien vers l'Internet, le lien comprend un champ de saisie de texte, et le dispositif électronique (1) reçoit, depuis le site correspondant audit lien, le texte saisi tel que requis.

10. Procédé selon l'une des revendications 1 à 7, dans lequel la requête comprend l'adresse du dispositif électronique (1) dans une connexion locale (4), et le texte saisi tel que requis est reçu au niveau du dispositif électronique (1) au travers de la connexion locale (4).

11. Procédé selon l'une des revendications précédentes, comprenant les étapes supplémentaires d'émettre un signal d'affichage affichant le texte saisi tel que requis, reçu au niveau du dispositif électronique (1) (S9) et confirmant la saisie de texte par le moyen de contrôle de l'utilisateur du dispositif électronique (1) (S10).

12. Procédé pour la saisie de texte à distance dans un dispositif électronique (1) par le biais d'un dispositif de communication (2), comprenant les étapes suivantes:
réception d'une requête de saisie de texte depuis le dispositif électronique (1) au niveau du dispositif de communication (2), la requête étant adressée au dispositif de communication (2) sur la base d'un identificateur stocké dans un module d'identification (24) du dispositif de communication (2);
réception du texte saisi par un utilisateur du dispositif de communication (2); et
envoi du texte saisi depuis le dispositif de communication (2) vers le dispositif électronique (1).

13. Programme informatique configuré pour exécuter le procédé selon l'une des revendications 1 à 12 sur un processeur.

14. Dispositif électronique (1), comprenant:
une section d'affichage (13) configurée pour émettre un signal d'affichage affichant un champ de texte pour la saisie de texte ;
une section de communication (11) configurée pour envoyer des informations à un dispositif de communication (2) adressé par un identificateur d'un module d'identification (24) du dispositif de communication (2) et pour recevoir des informations depuis le dispositif de communication (2) ;
un processeur (14) configuré pour :
contrôler la section d'affichage (13) pour émettre un signal d'affichage affichant un champ de texte pour la saisie de texte ;
contrôler la section de communication (11) pour envoyer une requête pour la saisie de texte au dispositif de communication (2) et
recevoir, à partir du dispositif de communication (2), le texte saisi tel que requis.

15. Système comprenant le dispositif électronique (1) selon la revendication 14 et un dispositif de communication (2) pour la saisie de texte dans le dispositif électronique (1).
